# EUROPEAN PATENT SPECIFICATION

(11) **EP 2 394 893 B1**
(45) Date of publication and mention of the grant of the patent: **01.06.2016**
(21) Application number: 11169030.1
(22) Date of filing: 08.06.2011
(51) Int. Cl.: B62J 17/02, B62K 11/04

(54) **Saddle-ride type vehicle**
Motorrad
Véhicule à monture de selle

(30) Priority: 11.06.2010 JP 2010134330; 29.09.2010 JP 2010218475
(43) Date of publication of application: 14.12.2011
(73) Proprietor: Yamaha Hatsudoki Kabushiki Kaisha, Iwata-shi, Shizuoka 438-8501 (JP)
(72) Inventor: Suita, Yoshikazu, Iwata-shi, Shizuoka 438-8501 (JP); Kamimura, Kaoru, 10540 Samutprakarn (TH)
(74) Representative: Grünecker Patent- und Rechtsanwälte PartG mbB

(56) References cited:
- EP-A1- 2 168 850
- EP-A1- 2 179 912
- US-A1- 2008 202 835
- US-A1- 2009 050 386

## Description

### TECHNICAL FIELD

The present invention relates to a saddle-ride type vehicle.

### BACKGROUND ART

The saddle-ride type vehicles are generally provided with a foot board or a foot pedal in front of a seat for allowing a rider to put his/her feet thereon. Therefore, rider's feet are easily hit by mud splashed by a front wheel or dispersed objects from the front side. In view of the above, the saddle-ride type vehicles are provided with a side cover section for protecting rider's feet.

However, the side cover section blocks airflow as well as mud or dispersed objects. Accordingly, heat tends to be accumulated rearwards of the side cover section in the saddle-ride type vehicles especially when an engine is disposed below the seat and extended therefrom to the forward. Thus, the air flowing from the front side of the vehicle body is blocked due to the structure of the side cover section in the well-known saddle-ride type vehicles. Therefore, heat tends to be accumulated rearwards of the side cover section. In other words, temperature tends to be higher in a cover section disposed above the engine or cover sections disposed lateral to the engine and the air flowing the periphery of the cover section/sections.

Japan Laid-open Patent Application Publication No. JP-A-2004-291700 describes an exemplary motorcycle that the air on the outward of a leg shield flows at sharp angles into the inward of the leg shield from the rear end of the leg shield. In other words, turbulence occurs in the air behind the leg shield due to the perpendicularly edged shapes of the rear end of the leg shield. This makes it difficult to efficiently remove heat from the cover section disposed above the engine, the air lateral to the cover section, and the air above the cover section.

By contrast, the specification of US Patent Application Publication No. 2008/0202835 describes an exemplary structure of a motorcycle leg shield. The leg shield herein includes a smoothly curved surface bulged laterally outwards of the vehicle body. Therefore, turbulence does not normally occur behind the leg shield unlike the aforementioned case.

However, the leg shield described in US Patent Application Publication No. 2008/0202835 is required to be largely bulged laterally outwards from the vehicle body for allowing the leg shield to have a smoothly curved surface and for simultaneously protecting rider's feet. When the leg shield has a large size, the surface area of the leg shield is increased. Simply put, a high airflow regulation effect can be achieved. Nevertheless, the leg shield encounters large air resistance due to the shape largely bulged laterally outwards from the vehicle body. This makes it difficult to form smooth airflow.

**The document** EP2168850 A1 **according to the preamble of claim 1 discloses a saddle-ride type vehicle comprising a front wheel, a rear wheel, an engine unit, a steering unit including a front fork and a handlebar, a steering head, a vehicle body frame and a seat. An exterior cover is provided including a frame center cover, a forward cover and a front cover.**

It is an object of the present invention to provide a saddle-ride type vehicle for inhibiting the side cover section from being bulged laterally outwards from the vehicle body and for simultaneously achieving a high airflow regulation effect on the side cover section.

This object is solved by the features of claim 1.

Further improvements are laid down in the sub-claims.

### SUMMARY OF THE INVENTION

A saddle-ride type vehicle according to a first aspect of the present invention includes a front wheel, a rear wheel, a drive unit, a steering unit, a head pipe, a frame unit, a seat and a vehicle body cover. The drive unit is disposed between the front wheel and the rear wheel. The steering unit includes a front fork and a handle unit. The front fork supports the front wheel for allowing it to rotate. The handle unit is coupled to a top of the front fork. The head pipe supports the front fork for allowing it to rotate. The frame unit is connected to the head pipe while being disposed over the drive unit. The seat is disposed rearwards of the steering unit. The vehicle body cover includes a top cover section, a side cover section and a front cover section. The top cover section is disposed between the steering unit and the seat for covering a top side of the frame unit. The top cover section forms a downwardly recessed vehicle body outline between the steering unit and the seat in a side view of the vehicle. The side cover section covers a lateral side of the front fork. The side cover section is extended from a position forward of the steering unit to a position below the top cover section. The side cover section is fixed to the frame unit. The front cover section is separately provided from the side cover section. The front cover section is connected to a top portion of the side cover section. The front cover section covers a front side of the head pipe. Further, the side cover section includes a first recessed portion extended rearwards from a front end of the side cover section. A fixation portion between the front cover section and the side cover section is positioned above the first recessed portion.

A saddle-ride type vehicle according to a second aspect of the present invention relates to the saddle-ride type vehicle according to the first aspect of the present invention. In the saddle-ride type vehicle, a front part of the side cover section is slanted for positioning a front portion thereof closer to a transverse center of the vehicle than a rear portion thereof. A front part of the first recessed portion is slanted for positioning a front portion thereof closer to the transverse center of the vehicle than a rear portion thereof.

A saddle-ride type vehicle according to a third aspect of the present invention relates to the saddle-ride type vehicle according to the first aspect of the present invention. In the saddle-ride type vehicle, the side cover section includes a first slanted surface and a second slanted surface. The first slanted surface is slanted for gradually separating away from a vehicle body center in a transverse direction of the vehicle in proportion to reduction in height from a top end thereof. The second slanted surface is slanted for gradually separating away from the vehicle body center in the transverse direction of the vehicle in proportion to increase in height from a bottom end thereof. The second slanted surface is positioned below the first slanted surface. The first recessed portion is positioned between the first slanted surface and the second slanted surface in a vertical direction of the vehicle.

A saddle-ride type vehicle according to a fourth aspect of the present invention relates to the saddle-ride type vehicle according to the first aspect of the present invention. In the saddle-ride type vehicle, a relation D1 > D2 is satisfied. In the relation, D1 is set as a distance between a rotation center of the front wheel and a front end of the side cover section in a side view of the vehicle. In the relation, D2 is set as a distance between the rotation center of the front wheel and an edge portion of the side cover section in the side view of the vehicle. The edge portion is one of two edge portions arranged on a theoretical line connecting the rotation center of the front wheel and a fixation position of the side cover section to the frame unit in the side view of the vehicle. The edge portion is disposed closer to the front wheel than the rest of the two edge portions is.

A saddle-ride type vehicle according to a fifth aspect of the present invention relates to the saddle-ride type vehicle according to the first aspect of the present invention. The saddle-ride type vehicle further includes a head light. The head light is disposed forwards of the handle unit. Further, the front cover section is separated away from the head light.

A saddle-ride type vehicle according to a sixth aspect of the present invention relates to the saddle-ride type vehicle according to the first aspect of the present invention. In the saddle-ride type vehicle, a boundary between the front cover section and the side cover section is disposed in a second recessed portion. The second recessed portion is disposed higher than the first recessed portion. The second recessed portion is recessed inwards on the vehicle body cover.

### <Advantageous Effects of Invention>

According to the saddle-ride type vehicle of the first aspect of the present invention, the first recessed portion is disposed while being extended rearwards from the front end of the side cover section. The surface area of the side cover section can be thereby increased while the side cover section can be inhibited from being bulged laterally outwards from the vehicle body. Therefore, an airflow regulation effect can be enhanced on the side cover section while the side cover section can be inhibited from being bulged laterally outwards from the vehicle body. Further, the fixation portion between the front cover section and the side cover section is positioned above the first recessed portion. Therefore, the seam between the front cover section and the side cover section is not produced on the first recessed portion. In other words, the surface of the first recessed portion can be smoothly formed. Accordingly, the airflow regulation effect can be further enhanced on the side cover section.

According to the saddle-ride type vehicle of the second aspect of the present invention, it is possible to smoothly flow the air from front to rear of the vehicle along the surface of the side cover section. Accordingly, the airflow regulation effect can be further enhanced on the side cover section.

According to the saddle-ride type vehicle of the third aspect of the present invention, the first recessed portion is positioned between the first slanted surface and the second slanted surface in the vertical direction. Therefore, the side cover section can be further inhibited from being bulged laterally outwards from the vehicle body.

According to the saddle-ride type vehicle of the fourth aspect of the present invention, the distance D2 is less than the distance D1. In other words, the side cover section is disposed in a wide range on the theoretical line connecting the rotation center of the front wheel and the fixation position of the side cover section to the frame unit in the side view of the vehicle body. In other words, the surface area of the side cover section is increased, and the airflow regulation effect can be thereby further enhanced.

According to the saddle-ride type vehicle of the fifth aspect of the present invention, the head light is disposed forwards of the handle unit without being disposed in the front cover section. Therefore, the front cover section can be produced in a shape flatter than that of the front cover section including the head light therein. Therefore, the airflow regulation effect can be enhanced on the front cover section.

According to the saddle-ride type vehicle of the sixth aspect of the present invention, the air flowing from the front side of the vehicle body can be guided not only by the first recessed portion but also by the second recessed portion. Accordingly, it is possible to enhance the airflow regulation effect of the entire vehicle.

### BRIEF DESCRIPTION OF THE DRAWINGS

Referring now to the attached drawings which form a part of this original disclosure:
FIG. 1 is a left side view of a saddle-ride type vehicle according to an exemplary embodiment of the present invention;
FIG. 2 is a front view of the saddle-ride type vehicle;
FIG. 3 is a top view of the saddle-ride type vehicle;
FIG. 4 is a side view of a vehicle body cover;
FIG. 5 is an enlarged side view of a front portion of the saddle-ride type vehicle;
FIG. 6 is an enlarged partial front view of the saddle-ride type vehicle;
FIG. 7 is a partial front view of a front cover section and a left side cover section;
FIG. 8 is a perspective view of the inner surface of the left side cover section;
FIG. 9 is an enlarged partial view of the front cover section and the left side cover section;
FIG. 10 is a cross-sectional view of the vehicle body cover sectioned along a line X-X in FIG. 4; and
FIG. 11 is an enlarged partial front view of a saddle-ride type vehicle according to another exemplary embodiment.

### DETAILED DESCRIPTION OF THE EMBODIMENTS

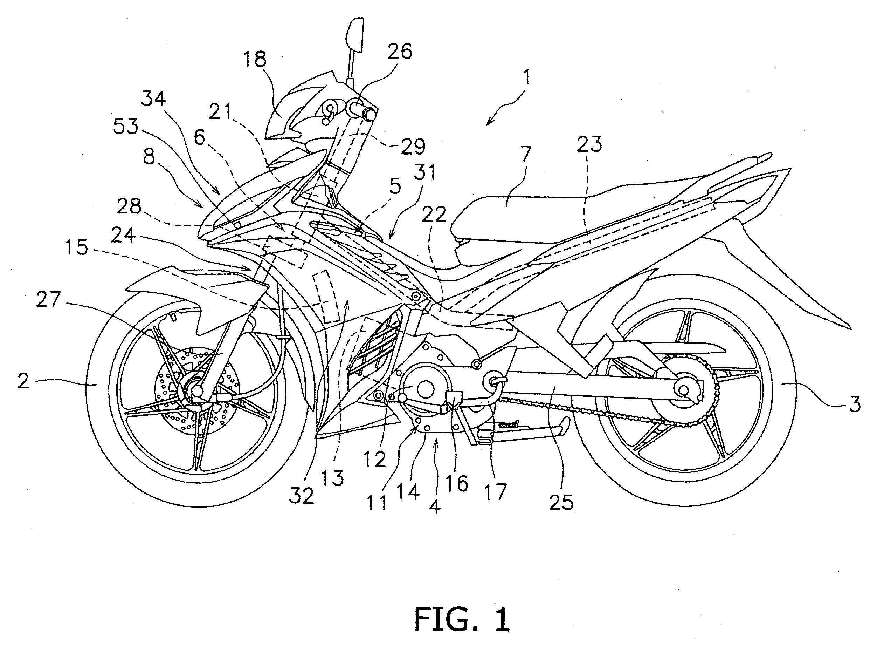

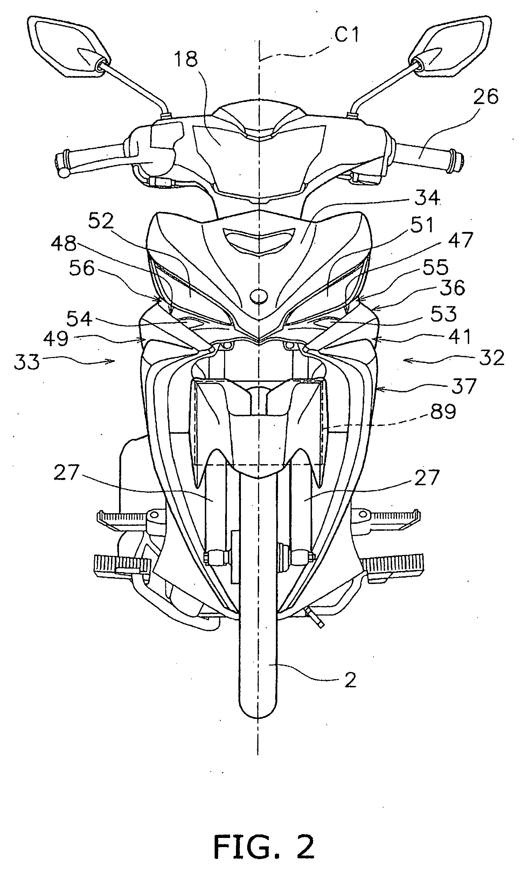

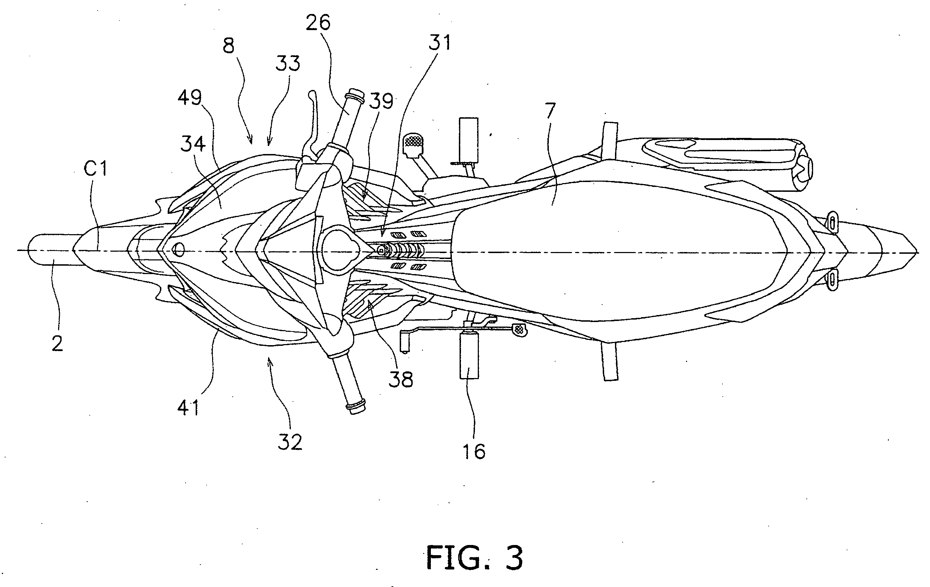

An exemplary embodiment of the present invention will be hereinafter explained with reference to figures. FIG. 1 is a side view of a saddle-ride type vehicle 1 according to the exemplary embodiment of the present invention. FIG. 2 is a front view of the saddle-ride type vehicle 1. FIG. 3 is a top view of the saddle-ride type vehicle 1. The saddle-ride type vehicle 1 is so called a moped. In the saddle-ride type vehicle 1, a downwardly recessed shape is produced for a section interposed between a seat 7 to be described and a steering section 6 to be described in a longitudinal (back and forth) direction of a vehicle body. It should be noted that directional terms such as "front", "rear", "right" and "left" and their related terms refer to directions seen from a rider seated on the seat 7 of the saddle-ride type vehicle 1 in the following explanation unless otherwise specified. Further, the terms "lateral" and its related terms refer to a direction separated away from the vehicle body center in a transverse (width/right-and-left) direction of the vehicle. As illustrated in FIG. 1, the saddle-ride type vehicle 1 includes a front wheel 2, a rear wheel 3, a drive unit 4, a vehicle body frame 5, the steering unit 6, the seat 7, a vehicle body cover 8 and the like.

The drive unit 4 is longitudinally disposed between the front wheel 2 and the rear wheel 3 while being supported by the vehicle body frame 5. The drive unit 4 includes an engine 11 and a transmission 12. The engine 11 is a water-cooled engine including a cylinder unit 13 and a crankcase 14. The cylinder unit 13 is disposed on the front side of the crankcase 14. The cylinder unit 13 is disposed at a slanted posture for positioning the front portion thereof higher than the rear portion thereof. Further, a radiator 15 is disposed forwards of the cylinder unit 13. The transmission 12 is disposed lateral to the crankcase 14. The transmission 12 is configured to transmit the drive force from the engine 11 to the rear wheel 3 through a chain. Steps 16 and a change pedal 17 are disposed lateral to the transmission 12. A rider puts his/her feet on the steps 16 and shifts up/down gears of the transmission 12 by operating the change pedal 17 with his/her foot.

The vehicle body frame 5 includes a head pipe 21, a main frame 22 as "a frame unit" of the present invention, and a rear frame 23. The head pipe 21 supports a front fork 24 to be described for allowing it to rotate. The main frame 22 is connected to the head pipe 21 while being extended therefrom obliquely rearwards and downwards. The main frame 22 is disposed over the drive unit 4. A rear arm 25 is pivotably attached to the rear portion of the main frame 22 through a bracket (not illustrated in the figure). The rear arm 25 supports the rear wheel 3 for allowing it to rotate. The rear frame 23 is connected to the main frame 22 while being extended therefrom obliquely rearwards and upwards. The rear frame 23 is disposed over the rear wheel 3. The seat 7 is disposed over the rear frame 23 while being supported by the rear frame 23.

The steering unit 6 includes the front fork 24 and a handle unit 26. The front fork 24 supports the front wheel 2 for allowing it to rotate. Specifically, the front fork 24 includes a pair of front suspensions 27, a bracket 28 and a steering shaft 29. The front suspensions 27 are disposed away from each other in the vehicle transverse direction of the vehicle. The front suspensions 27 support the front wheel 2 for allowing it to rotate. The tops of the front suspensions 27 are attached to the bracket 28. The bracket 28 is attached to the bottom of the steering shaft 29. The steering shaft 29 is rotatably inserted into the head pipe 21. The handle unit 26 is coupled to the top of the steering shaft 29. In other words, the handle unit 26 is coupled to the top of the front fork 24. Further, a head light 18 is disposed forwards of the handle unit 26. The head light 18 is configured to rotate together with the handle unit 26 in conjunction with rotation of the steering shaft 29 with respect to the head pipe 21.

The seat 7 is disposed over the rear frame 23. The seat 7 is disposed rearwards of the steering unit 6 while being separated away from the steering unit 6.

The vehicle body cover 8 is a resin member covering the vehicle body frame 5. The vehicle body cover 8 includes a top cover section 31, a pair of side cover sections 32 and 33 (see FIG. 2) and a front cover section 34.

The top cover section 31 is longitudinally disposed between the steering unit 6 and the seat 7 for covering the top side of the main frame 22. In the side view of the vehicle body, the top cover section 31 forms a downwardly recessed vehicle body outline between the steering unit 6 and the seat 7. The surface of the top cover section 31 is slanted for positioning the front portion thereof higher than the rear portion thereof. The aforementioned main frame 22 is disposed under the top cover section 31. As illustrated in FIG. 3, the top cover section 31 includes a left top surface opening portion 38 and a right top surface opening portion 39. The left top surface opening portion 38 and the right top surface opening portion 39 are separated away from each other in the transverse direction of the vehicle. The structure of the left top surface opening portion 38 is bilaterally symmetrical to that of the right top surface opening portion 39.

A pair of the side cover sections 32 and 33 (hereinafter referred to as "a right side cover section 33" and "a left side cover section 32") at least partially covers the both lateral sides of the drive unit 4. For example, the side cover sections 32 and 33 cover the both lateral sides of the cylinder unit 13. Alternatively, the side cover sections 32 and 33 may entirely cover the both lateral sides of the engine 11. Yet alternatively, the side cover sections 32 and 33 may entirely cover the both lateral sides of the drive unit 4. As illustrated in FIG. 1, the left side cover section 32 covers each of the left sides of the cylinder unit 13 of the engine 11, the front fork 24, the radiator 15 and the like. The left side cover section 32 is extended from the position forward of the steering unit 6 to the position below the top cover section 31. As illustrated in FIG. 2, the left side cover section 32 includes a first slanted surface 36 and a second slanted surface 37. The first slanted surface 36 is slanted for gradually separating away from the vehicle body center in the transverse direction of the vehicle in proportion to reduction in height from the top portion thereof (see a dashed dotted line C1). The second slanted surface 37 is positioned below the first slanted surface 36. The second slanted surface 37 is slanted for gradually separating away from the vehicle body center in the transverse direction of the vehicle in proportion to increase in height from the bottom portion thereof. Further, the front portion of the left side cover section 32 is slanted for positioning the front portion thereof closer to the vehicle body center in the transverse direction of the vehicle than the rear portion thereof, as illustrated in FIG. 3. In the specification of the present application, the term "vehicle body center in the transverse direction of the vehicle" is defined by the plane that is arranged along the longitudinal and vertical (up-and-down) directions of the vehicle and simultaneously passes through the transverse center of one of the front wheel 2, the rear wheel 3, the front cover section 34 and the head pipe 21.

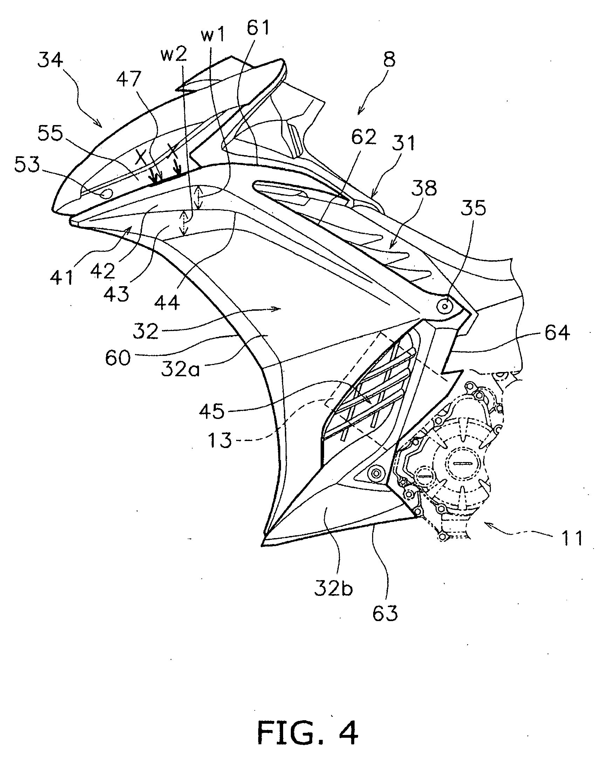

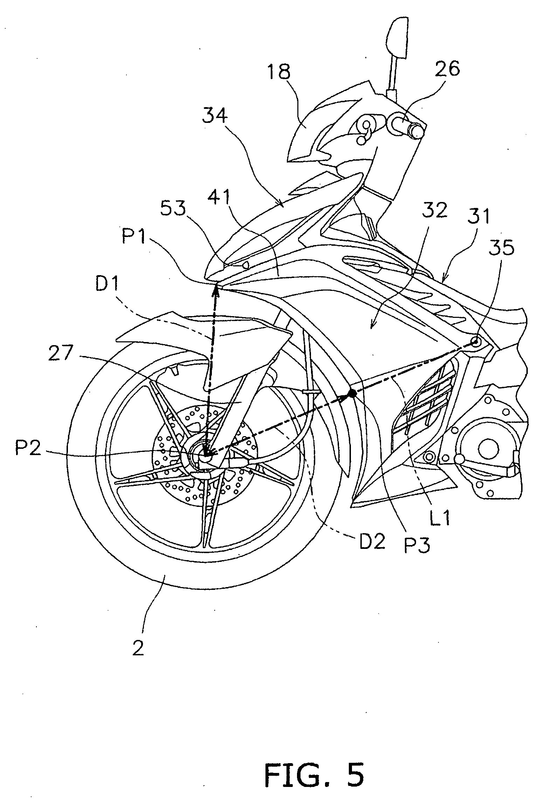

FIG. 4 illustrates a side view of the vehicle body cover 8. In the side view of the vehicle body, a front edge portion 60 of the left side cover section 32 has a backwardly recessed shape curved along the outline of the front wheel 2. A top portion 61 of the left side cover section 32 is connected to both the top cover section 31 and the front cover section 34. The top portion 61 of the left side cover section 32 includes a recess 62 in a portion thereof disposed adjacent to the top cover section 31. The aforementioned left top surface opening portion 38 is disposed within the recess 62. The top portion 61 of the left side cover section 32 includes a slanted portion disposed adjacent to the front cover section 34, and the slanted portion is slanted for positioning the rear portion thereof higher than the front portion thereof. A bottom portion 63 of the left side cover section 32 is positioned at roughly the same height as the bottom portion of the engine 11. A rear portion 64 of the left side cover section 32 is positioned rearwards of the cylinder unit 13 of the engine 11. The left side cover section 32 is fixed to the main frame 22 at a fixation portion 35 thereof. The fixation portion 35 corresponds to "a fixation position" of "a side cover section" to "the frame unit" in the present invention. The fixation portion 35 is a rear end portion of the left side cover section 32, and is disposed in a vertically intermediate position of the left side cover section 32. The left side cover section 32 includes an opening 45. The opening 45 communicates with the inside of the vehicle body cover 8 (i.e., the inner space enclosed by the vehicle body cover 8). The cylinder unit 13 of the engine 11 is positioned inwards of the opening 45. As illustrated in FIG. 5, the following relation is herein satisfied: "D1 > D2". Here, D1 refers to the distance between a rotation center P2 of the front wheel 2 and a front end P1 of the left side cover section 32 in the side view of the vehicle body. On the other hand, D2 refers to the distance between the rotation center P2 of the front wheel 2 and an edge portion P3 of the left side cover section 32 in the side view of the vehicle body. The edge portion P3 is one of the edge portions of the left side cover section 32 that are arranged on a theoretical line L1 connecting the fixation portion 35 of the left side cover section 32 and the rotation center P2 of the front wheel 2. More specifically, the edge portion P3 is a closer one of the edge portions to the front wheel 2.

Further, the left side cover section 32 includes a first recessed portion 41. The first recessed portion 41 is extended rearwards from the front end of the left side cover section 32. The first recessed portion 41 is disposed for extending lateral to the front fork 24. Further, the first recessed portion 41 is extended rearwards while being extended at least to a lateral edge of the vehicle in the front view. More specifically, the rear portion of the first recessed portion 41 is disposed below the top cover section 31 in the side view of the vehicle body. In the side view of the vehicle body, the first recessed portion 41 is bent convexly upwards. In the side view of the vehicle body, a portion of the first recessed portion 41, disposed forwards of the bent position of the first recessed portion 41, is extended roughly along the longitudinal direction of the vehicle. In the side view of the vehicle body, a portion of the first recessed portion 41, disposed rearwards of the bent position of the first recessed portion 41, is slanted for positioning the rear portion thereof lower than the front portion thereof. Further, the front portion of the first recessed portion 41 is slanted for positioning the front portion thereof closer to the vehicle body center in the transverse direction of the vehicle than the rear portion thereof to be, as illustrated in FIG. 3. The rear portion of the first recessed portion 41 is slanted for positioning the rear portion thereof closer to the vehicle body center in the transverse direction of the vehicle than the front portion thereof.

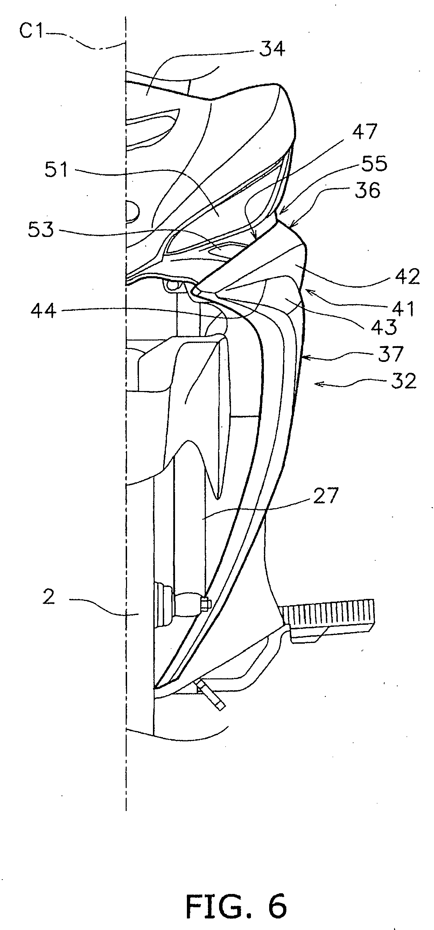

Further, the first recessed portion 41 is disposed between the first slanted surface 36 and the second slanted surface 37 in the vertical direction, as illustrated in FIG. 6. Yet further, the first recessed portion 41 is formed by slanted surfaces. Specifically, the first recessed portion 41 includes an upper slanted surface 42 and a lower slanted surface 43. The upper slanted surface 42 is slanted for positioning the top portion thereof to be further separated away from the vehicle body center in the transverse direction of the vehicle than the bottom portion thereof to be. In the side view of FIG. 4, a vertical width w1 of the upper slanted surface 42 is gradually increased from the front end of the left side cover section 32 to the rearward. The vertical width w1 is maximized at a position forward of the left top surface opening portion 38. The vertical width w1 is gradually reduced to the rearward in a rear portion of the upper slanted surface 42, i.e., the portion disposed rearwards of the position of maximizing the vertical width w1. The top portion of the upper slanted surface 42 is connected to the first slanted surface 36. The lower slanted surface 43 is slanted for positioning the bottom portion thereof to be further separated away from the vehicle body center in the transverse direction of the vehicle than the top portion thereof to be. The lower slanted surface 43 is positioned lower than the upper slanted surface 42. The top portion of the lower slanted surface 43 is connected to the bottom portion of the upper slanted surface 42. The bottom portion of the lower slanted surface 43 is connected to the second slanted surface 37. In a side view, a vertical width w2 of the lower slanted surface 43 is gradually increased from the front end of the left side cover section 32 to the rearward. The vertical width w2 is maximized at a position forward of the left top surface opening portion 38. The vertical width w2 is gradually reduced to the rearward in a rear portion of the lower slanted surface 43, i.e., the portion disposed rearwards of the position of maximizing the vertical width w2. It should be noted that the position of maximizing the vertical width w2 of the lower slanted surface 43 is positioned forwards of the position of maximizing the vertical width w1 of the upper slanted surface 42.

A bottom 44 of the first recessed portion 41 is produced in a bent shape between the upper slanted surface 42 and the lower slanted surface 43. The bottom 44 is extended rearwards from the front end of the left side cover section 32 along the roughly longitudinal direction. Further, the rear portion of the bottom 44 is extended obliquely downwards and rearwards while being disposed below the left top surface opening portion 38.

It should be noted that the left side cover section 32 includes a first component 32a and a second component 32b. The first component 32a is an individual component integrally molded. The first component 32a includes the aforementioned first recessed portion 41 and the aforementioned top portion 61 of the side cover section 32. Further, the first component 32a includes the front edge portion 60 of the left side cover section 32. On the other hand, the second component 32b includes the bottom and rear portions 63 and 64 of the left side cover section 32. The aforementioned opening 45 is disposed between the first component 32a and the second component 32b.

The front cover section 34 is an individual component separately provided from the side cover sections 32 and 33. The front cover section 34 is disposed away from the head light 18. The front cover section 34 covers the front side of the head pipe 21. As illustrated in FIG. 2, the front cover section 34 is coupled to the top end of the left side cover section 32 and the top end of the right side cover section 33. In FIG. 2, a reference numeral 47 indicates the boundary between the front cover section 34 and the top end of the left side cover section 32. The boundary 47 between the front cover section 34 and the top end of the left side cover section 32 is disposed in a second recessed portion 55. In other words, the second recessed portion 55 is formed by the bottom end of the front cover section 34 and the top end of the left side cover section 32. The second recessed portion 55 is recessed inwards on the vehicle body cover 8. The second recessed portion 55 is positioned higher than the first recessed portion 41.

Further, the front cover section 34 includes a left flasher unit 51 and a right flasher unit 52. The left flasher unit 51 and the right flasher unit 52 are disposed away from each other in the transverse direction of the vehicle. Further, the front cover section 34 includes an aperture 53 below the left flasher unit 51. The aperture 53 is disposed in the second recessed portion 55. The aforementioned first recessed portion 41 is positioned lower than the boundary 47 between the front cover section 34 and the left side cover section 32. As illustrated in FIG. 4, the first recessed portion 41 is extended rearwards of the second recessed portion 55.

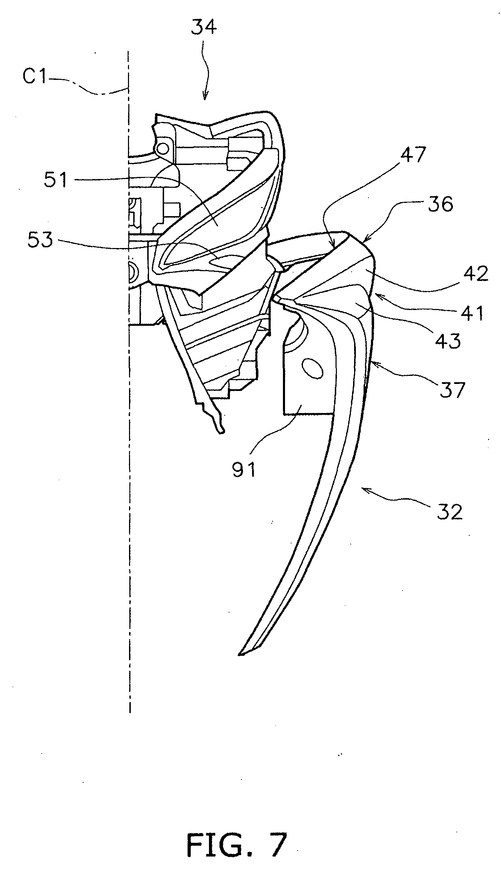

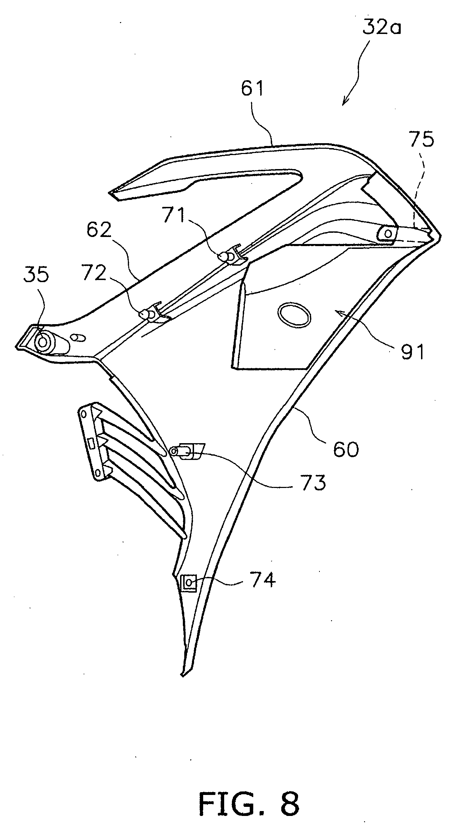

As illustrated in FIG. 7, the left side cover section 32 is an individual component separately provided from the front cover section 34. Further, the left side cover section 32 is an individual component separately provided from the top cover section 31 (see FIG. 4). The left side cover section 32 is attached to both the front cover section 34 and the top cover section 31 while being disposed lateral to both the front cover section 34 and the top cover section 31. It should be noted that the left side cover section 32 covers the bottom portion of the front cover section 34 from the lateral side. FIG. 8 is a perspective view of the inner surface of the first component 32a of the left side cover section 32. The first component 32a includes a plurality of inner fixation portions 71 to 75 on the inner surface thereof. The inner fixation portions 71 to 75 are protrusions protruded from the inner surface of the first component 32a. The first component 32a is fixed to the top cover section 31 through the inner fixation portions 71 and 72. The first component 32a is fixed to the second component 32b through the inner fixation portion 73. The first component 32a is fixed to a first component of the right side cover section 33 through the inner fixation portion 74 and a coupling member (not illustrated in the figures). The first component 32a is fixed to the front cover section 34 through the inner fixation portion 75.

It should be noted that a guide member 91 is fixed to the inner surface of the left side cover section 32. The guide member 91 guides the air flowing in the inward of the vehicle body cover 8 towards the opening 45.

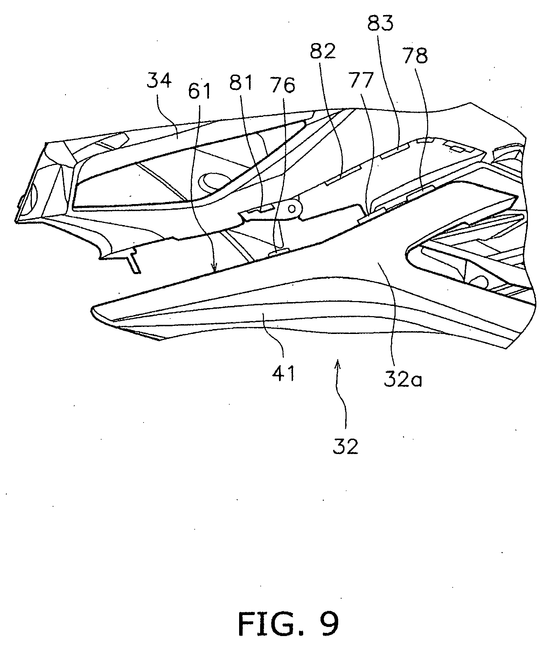

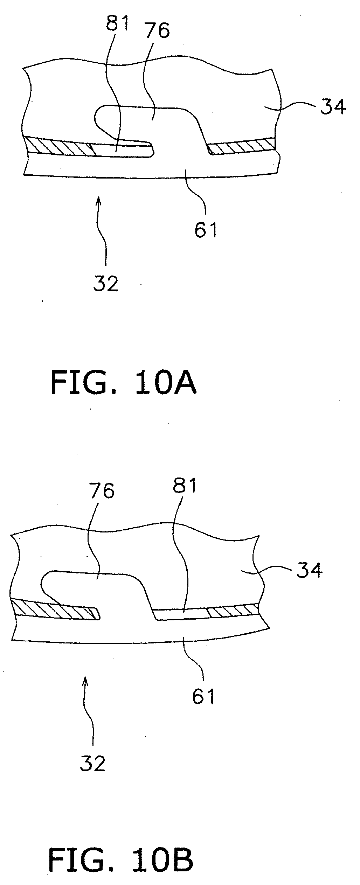

As illustrated in FIG. 9, the top portion 61 of the first component 32a, i.e., the top portion 61 of the left side cover section 32 includes a plurality of top fixation portions 76, 77 and 78. The top fixation portions 76, 77 and 78 are disposed along the edge of the top portion 61 of the left side cover section 32 while being positioned above the aforementioned first recessed portion 41. On the other hand, the front cover section 34 includes apertures 81, 82 and 83 disposed to be matched with the top fixation portions 76, 77 and 78 on a one-to-one basis. Each of the apertures 81, 82 and 83 has an elongated shape extended along the edge of the top portion 61 of the left side cover section 32, i.e., the boundary 47 between the left side cover section 32 and the front cover section 34. As illustrated in FIG. 10, the top fixation portions 76 is protruded from the edge of the top portion 61 of the left side cover section 32 while being bent in the direction along the boundary 47 between the left side cover section 32 and the front cover section 34. The shapes of the other top fixation portions 77 and 78 are roughly the same as the shape of the top fixation portion 76. When the left side cover section 32 is fixed to the front cover section 34, the left side cover section 32 is slid with respect to the front cover section 34 under the condition that the top fixation portion 76 is kept inserted through the aperture 81 as illustrated in FIG. 10(a). The top fixation portion 76 is thereby engaged with the edge of the aperture 81, as illustrated in FIG. 10(b). Similarly, the top fixation portion 77 and the aperture 82 are engaged, whereas the top fixation portion 78 and the aperture 83 are engaged. The left side cover section 32 is thereby fixed to the front cover section 34. Especially, the top portion 61 of the left side cover section 32 is firmly fixed to the front cover section 34. It should be noted that FIG. 10 illustrates a cross-section of the vehicle body cover 8 sectioned along a line X-X in FIG. 4.

As illustrated in FIG. 2, the right side cover section 33 is disposed bilaterally symmetric to the left side cover section 32. Simply put, the right side cover section 33 includes a first recessed portion 49. The first recessed portion 49 is disposed bilaterally symmetric to the first recessed portion 41 of the left side cover section 32. Further, the front cover section 34 has a bilaterally symmetric shape. A boundary 48 between the front cover section 34 and the top end of the right side cover section 33 is disposed in a second recessed portion 56. The second recessed portion 56 is disposed bilaterally symmetric to the aforementioned second recessed portion 55. Further, the front cover section 34 includes an aperture 54 below the right flasher unit 52. The aperture 54 is disposed in the second recessed portion 56. The aperture 54 is disposed bilaterally symmetric to the aforementioned aperture 53.

It should be noted that the vehicle body cover 8 includes an opening 89 in a portion thereof positioned forwards of the radiator 15, as illustrated in FIG. 2. The opening 89 is positioned rearwards of the front wheel 2.

While the saddle-ride type vehicle 1 travels, air flows into the inside of the vehicle body cover 8 through the apertures 53 and 54 of the front cover section 34. Further, air flows into the inside of the vehicle body cover 8 through the opening 89 of the vehicle body cover 8. A part of the air flowing into the inside of the vehicle body cover 8 flows to the outside through the right and left top surface opening sections 39 and 38 of the top cover section 31 illustrated in FIG. 3. On the other hand, another part of the air flowing into the inside of the vehicle body cover 8 flows downwards and then flows to the outside from the opening 45 illustrated in FIG. 4. While the saddle-ride type vehicle 1 stops, by contrast, the warmed air flows up through the inside of the vehicle body cover 8. The warmed air subsequently flows to the outside through the right and left top surface opening sections 39 and 38 of the top cover section 31.

The saddle-ride type vehicle 1 according to the present exemplary embodiment of the present invention has the following features.

The first recessed portion 41 is disposed for extending rearwards from the front end of the left side cover section 32. Therefore, the surface area of the left side cover section 32 can be increased while the left side cover section 32 can be inhibited from being bulged laterally outwards from the vehicle body. Accordingly, an airflow regulation effect can be enhanced on the left side cover section 32 while the left side cover section 32 is inhibited from being bulged laterally outwards from the vehicle body.

The front part of the first recessed portion 41 is slanted for positioning the front portion thereof closer to the vehicle body center in the transverse direction of the vehicle than the rear portion thereof. Therefore, it is possible to smoothly flow the air from front to rear of the vehicle along the surface of the left side cover section 32. Accordingly, the airflow regulation effect can be further enhanced on the left side cover section 32.

In the front view of the vehicle body, the first recessed portion 41 is disposed between the first slanted surface 36 and the second slanted surface 37 in the vertical direction. Now, an exemplary case is assumed that the first and second slanted surfaces 36 and 37 are smoothly connected. The first recessed portion 41 is herein disposed in a position corresponding to the vertex (i.e., a portion laterally bulged most) of the curved surface of the left side cover section 32. Therefore, the left side cover section 32 can be further inhibited from being bulged laterally outwards from the vehicle body due to the above positional configuration of the first recessed portion 41.

As illustrated in FIG. 5, the distance D2 is less than the distance D1. In other words, the left side cover section 32 has a large positional range on the line L1 connecting the fixation portion 35 of the left side cover section 32 and the rotation center P2 of the front wheel 2 in the side view of the vehicle body. Therefore, a large surface area is achieved for the left side cover section 32 and the airflow regulation effect can be further enhanced.

The head light 18 is disposed forwards of the handle unit 26 without being disposed in the front cover section 34. Therefore, the front cover section 34 can be produced in a shape flatter than the shape of the front cover section 34 embedded with the head light 18. Accordingly, the airflow regulation effect can be enhanced on the front cover section 34.

The first recessed portion 41 is positioned lower than the boundary 47 between the front cover section 34 and the left side cover section 32. Therefore, the air is allowed to easily flow from front to rear of the vehicle body through the first recessed portion 41 along the surface of the left side cover section 32. Accordingly, the airflow regulation effect can be further enhanced on the left side cover section 32.

The air, flowing from the front of the vehicle body, can be guided not only by the first recessed portion 41 but also by the second recessed portion 55. It is therefore possible to enhance the airflow regulation effect of the entire vehicle body.

Further, the first recessed portion 49 of the right side cover section 33 can achieve the same advantageous effects as those of the aforementioned first recessed portion 41.

An exemplary embodiment of the present invention has been described above. However, the present invention may not be limited to the aforementioned exemplary embodiment and a variety of changes can be made for the present invention without departing from the scope of the present invention as defined by the claims. For example, the positions of the first recessed portions 41 and 49 may be different from the aforementioned positions thereof as long as the first recessed portions 41 and 49 are respectively disposed on the side cover sections 32 and 33. Further, the shapes of the first recessed portions 41 and 49 may be different from the aforementioned shapes thereof.

The second recessed portions 55 and 56 may be formed only by the front cover section 34. Alternatively, the second recessed portion 55 may be formed only by the side cover section 32, whereas the second recessed portion 56 may be formed only by the side cover sections 33. Yet alternatively, the second recessed portions 55 and 56 may not be necessarily provided.

In the aforementioned exemplary embodiment, each of the first and second slanted surfaces 36 and 37 has a curved shape in the front view of the vehicle body. However, each of the first and second slanted surfaces 36 and 37 may have a liner shape. Alternatively, each of the first and second slanted surfaces 36 and 37 may have a shape formed by a combination of line and curve.

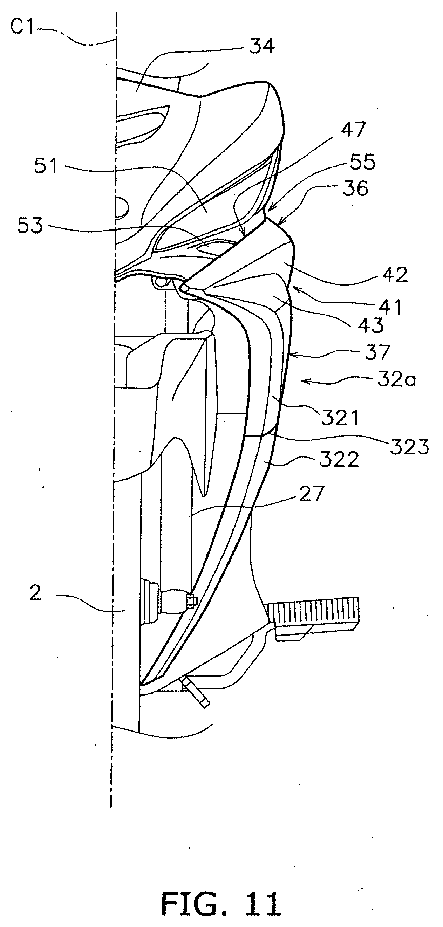

As illustrated in FIG. 11, the first component 32a may be formed by a plurality of components 321 and 322. However, it is herein preferable that a seam 323 between the components 321 and 322 is not overlapped with the first recessed portion 41.

In the aforementioned exemplary embodiment, the warmed air in the inside of the vehicle body cover 8 flows to the outside from the opening 45, the left top surface opening portion 38 and the right top surface opening portion 39. However, the structure for allowing the air to flow to the outside from the inside of the vehicle body cover 8 may not be limited to the aforementioned structure. For example, another opening may be provided. Alternatively, the opening 45 may not be provided. Yet alternatively, the right and left top surface opening portions 39 and 38 may not be provided.

The exemplary embodiment has been described in connection to a moped. However, the invention can also be applied to another saddle-riding type vehicles, such as other wheeled motor vehicles, e.g. trikes or squads.

## Claims

1. A saddle-ride type vehicle (1), comprising:
a front wheel (2);
a rear wheel (3);
a drive unit (4) disposed between the front wheel (2) and the rear wheel (3);
a steering unit (6) including: a front fork (24) supporting the front wheel (2) for allowing the front wheel (2) to rotate; and a handle unit (26) coupled to a top of the front fork (24);
a head pipe (21) supporting the front fork (24) for allowing the front fork (24) to rotate;
a frame unit (22) connected to the head pipe (21), the frame unit (22) disposed over the drive unit (4); and
a seat (7) disposed rearwards of the steering unit (6); and
a vehicle body cover (8) including:
a top cover section (31) disposed between the steering unit (6) and the seat (7) for covering a top side of the frame unit (22), the top cover section (31) forming a downwardly recessed vehicle body outline between the steering unit (6) and the seat (7) in a side view of the vehicle;
a side cover section (32, 33) covering a lateral side of the front fork (24), the side cover section (32, 33) extended from a position forward of the steering unit (6) to a position below the top cover section (31), the side cover section (32, 33) fixed to the frame unit (22); and
a front cover section (34) separately provided from the side cover section (32, 33), the front cover section (34) connected to a top portion of the side cover section (32, 33), the front cover section (34) covering a front side of the head pipe (21),
the side cover section (32, 33) includes a first recessed portion (41) extended rearwards from a front end of the side cover section (32, 33), and **characterised by** a fixation portion (76, 77, 78) between the front cover section (34) and the side cover section (32, 33) positioned above the first recessed portion (41) such that a seam between the front cover section (34) and the side cover section (32, 33) is not produced on the first recessed portion (41).

2. The saddle-ride type vehicle according to claim 1,
wherein a front part of the side cover section (32, 33) is slanted for positioning a front portion thereof closer to a transverse center of the vehicle than a rear portion thereof, and
a front part of the first recessed portion (41) is slanted for positioning a front portion thereof closer to the transverse center of the vehicle than a rear portion thereof.

3. The saddle-ride type vehicle according to claim 1 or 2,
wherein the side cover section (32, 33) includes a first slanted surface (36) and a second slanted surface (37),
the first slanted surface (36) is slanted for gradually separating away from a vehicle body center in a transverse direction of the vehicle in proportion to reduction in height from a top end thereof,
the second slanted surface (37) is positioned below the first slanted surface (36), the second slanted surface (37) slanted for gradually separating away from the vehicle body center in the transverse direction of the vehicle in proportion to increase in height from a bottom end thereof, and
the first recessed portion (41) is positioned between the first slanted surface (36) and the second slanted surface (37) in a vertical direction of the vehicle.

4. The saddle-type vehicle according to one of claims 1 to 3, wherein a relation D1 > D2 is satisfied where D1 is set as a distance between a rotation center (P2) of the front wheel (2) and a front end (P1) of the side cover section (32, 33) in a side view of the vehicle and D2 is set as a distance between the rotation center (P2) of the front wheel (2) and an edge portion (P3) of the side cover section (32, 33) in the side view of the vehicle, the edge portion (P3) being one of two edge portions arranged on a theoretical line (L1) connecting the rotation center of the front wheel (2) and a fixation position (35) of the side cover section (32, 33) to the frame unit (22) in the side view of the vehicle, the edge portion (P3) disposed closer to the front wheel (2) than the rest of the two edge portions is.

5. The saddle-ride type vehicle according to one of claims 1 to 4, further comprising:
a head light (18) disposed forwards of the handle unit (26),
wherein the front cover section (34) is separated away from the head light (18).

6. The saddle-ride type vehicle according to one of claims 1 to 5, wherein a boundary between the front cover section (34) and the side cover section (32, 33) is disposed in a second recessed portion (55), the second recessed portion (55) disposed higher than the first recessed portion (41), the second recessed portion (55) recessed inwards on the vehicle body cover (8).

## Patentansprüche

1. Spreizsitz-Fahrzeug (1), das umfasst:
ein Vorderrad (2);
ein Hinterrad (3);
eine Antriebs-Einheit (4), die zwischen dem Vorderrad (2) und dem Hinterrad (3) angeordnet ist;
eine Lenk-Einheit (6), die eine Vorderradgabel (24), die das Vorderrad (2) so trägt, dass sich das Vorderrad (2) drehen kann, sowie eine Griff-Einheit (26) enthält, die mit einem oberen Ende der Vorderradgabel (24) gekoppelt ist;
ein Steuerrohr (21), das die Vorderradgabel (24) so trägt, dass sich die Vorderradgabel (24) drehen kann;
eine Rahmen-Einheit (22), die mit dem Steuerrohr (21) verbunden ist, wobei die Rahmen-Einheit (22) über der Antriebs-Einheit (4) angeordnet ist; und
einen Sitz (7), der hinter der Lenk-Einheit (6) angeordnet ist; sowie
eine Fahrzeugkörper-Verkleidung (8), die enthält:
einen oberen Verkleidungs-Teilabschnitt (31), der zwischen der Lenk-Einheit (6) und dem Sitz (7) angeordnet ist und eine obere Seite der Rahmen-Einheit (22) abdeckt, wobei der obere Verkleidungs-Teilabschnitt (31) in einer Seitenansicht des Fahrzeugs einen nach unten vertieften Fahrzeugkörper-Umriss zwischen der Lenk-Einheit (6) und dem Sitz (7) bildet;
einen seitlichen Verkleidungs-Teilabschnitt (32, 33), der eine Längsseite der Vorderradgabel (24) abdeckt, wobei sich der seitliche Verkleidungs-Teilabschnitt (32, 33) von einer Position vor der Lenk-Einheit (6) zu einer Position unterhalb des oberen Verkleidungs-Teilabschnitts (31) erstreckt und der seitliche Verkleidungs-Teilabschnitt (32, 33) an der Rahmen-Einheit (22) befestigt ist; sowie
einen vorderen Verkleidungs-Teilabschnitt (34), der getrennt von dem seitlichen Verkleidungs-Teilabschnitt (32, 33) angeordnet ist, wobei der vordere Verkleidungs-Teilabschnitt (34) mit einem oberen Abschnitt des seitlichen Verkleidungs-Teilabschnitts (32, 33) verbunden ist und der vordere Verkleidungs-Teilabschnitt (34) eine Vorderseite des Steuerrohrs (21) abdeckt,
der seitliche Verkleidungs-Teilabschnitt (32, 33) einen ersten vertieften Abschnitt (41) enthält, der sich von einem vorderen Ende des seitlichen Verkleidungs-Teilabschnitts (32, 33) aus nach hinten erstreckt, und **gekennzeichnet durch** einen Befestigungsabschnitt (76, 77, 78) zwischen dem vorderen Verkleidungs-Teilabschnitt (34) und dem seitlichen Verkleidungs-Teilabschnitt (32, 33), der oberhalb des ersten vertieften Abschnitts (41) so angeordnet ist, dass keine Naht zwischen dem vorderen Verkleidungs-Teilabschnitt (34) und dem seitlichen Verkleidungs-Teilabschnitt (32, 33) an dem ersten vertieften Abschnitt (41) erzeugt wird.

2. Spreizsitz-Fahrzeug nach Anspruch 1,
wobei ein vorderer Teil des seitlichen Verkleidungs-Teilabschnitts (32, 33) so geneigt ist, dass ein vorderer Abschnitt desselben näher an einer Mitte des Fahrzeugs in Querrichtung positioniert ist als ein hinterer Abschnitt desselben, und
ein vorderer Teil des ersten vertieften Abschnitts (41) so geneigt ist, dass ein vorderer Abschnitt desselben näher an der Mitte des Fahrzeugs in der Querrichtung positioniert ist als ein hinterer Abschnitt desselben.

3. Spreizsitz-Fahrzeug nach Anspruch 1 oder 2,
wobei der seitliche Verkleidungs-Teilabschnitt (32, 33) eine erste geneigte Fläche (36) und eine zweite geneigte Fläche (37) enthält,
die erste geneigte Fläche (36) so geneigt ist, dass sie sich proportional zur Verringerung der Höhe von einem oberen Ende derselben her allmählich von einer Mitte des Fahrzeugkörpers in einer Querrichtung des Fahrzeugs entfernt,
die zweite geneigte Fläche (37) unterhalb der ersten geneigten Fläche (36) angeordnet ist und die zweite geneigte Fläche (37) so geneigt ist, dass sie sich proportional zur Zunahme der Höhe von einem unteren Ende derselben her allmählich von der Mitte des Fahrzeugkörpers in der Querrichtung des Fahrzeugs entfernt, und
der erste vertiefte Abschnitt (41) in einer vertikalen Richtung des Fahrzeugs zwischen der ersten geneigten Fläche (36) und der zweiten geneigten Fläche (37) angeordnet ist.

4. Spreizsitz-Fahrzeug nach einem der Ansprüche 1 bis 3, wobei ein Verhältnis D1 > D2 gilt und D1 als ein Abstand zwischen einem Drehmittelpunkt (P2) des Vorderrades (2) und einem vorderen Ende (P1) des seitlichen Verkleidungs-Teilabschnitts (32, 33) in einer Seitenansicht des Fahrzeugs festgelegt ist und D2 als ein Abstand zwischen dem Drehmittelpunkt (P2) des Vorderrades (2) und einem Kantenabschnitt (P3) des seitlichen Verkleidungs-Teilabschnitts (32, 33) in der Seitenansicht des Fahrzeugs festgelegt ist, wobei der Kantenabschnitt (P3) einer von zwei Kantenabschnitten ist, die in der Seitenansicht des Fahrzeugs auf einer theoretischen Linie (L1) angeordnet sind, die den Drehmittelpunkt des Vorderrades (2) und eine Befestigungsposition (35) des seitlichen Verkleidungs-Teilabschnitts (32, 33) an der Rahmen-Einheit (22) verbindet, und der Kantenabschnitt (P3) näher an dem Vorderrad (2) angeordnet ist als der Rest der zwei Kantenabschnitte.

5. Spreizsitz-Fahrzeug nach einem der Ansprüche 1 bis 4, das des Weiteren umfasst:
einen Scheinwerfer (18), der vor der Griff-Einheit (26) angeordnet ist,
wobei der vordere Verkleidungs-Teilabschnitt (34) von dem Scheinwerfer (18) getrennt ist.

6. Spreizsitz-Fahrzeug nach einem der Ansprüche 1 bis 5, wobei eine Grenze zwischen dem vorderen Verkleidungs-Teilabschnitt (34) und dem seitlichen Verkleidungs-Teilabschnitt (32, 33) in einem zweiten vertieften Abschnitt (55) angeordnet ist und der zweite vertiefte Abschnitt (55) höher angeordnet ist als der erste vertiefte Abschnitt (41) und der zweite vertiefte Abschnitt (55) an der Fahrzeugkörper-Verkleidung (8) nach innen vertieft ist.

## Revendications

1. Véhicule du type à selle (1), comprenant :
une roue avant (2) ;
une roue arrière (3) ;
une unité motrice (4) disposée entre la roue avant (2) et la roue arrière (3) ;
une unité de direction (6) incluant : une fourche avant (24) supportant la roue avant (2) pour permettre à la roue avant (2) de tourner ; et une unité de poignée (26) couplée à la partie supérieure de la fourche avant (24) ;
un tube de tête (21) supportant la fourche avant (24) pour permettre à la fourche avant (24) de tourner ;
une unité de cadre (22) reliée au tuyau de tête (21), l'unité de cadre (22) étant disposée au-dessus de l'unité motrice (24) ; et
un siège (7) disposé en arrière de l'unité de direction (6) ; et
un capot de carrosserie de véhicule (8) incluant :
une section de capot supérieure (31) disposée entre l'unité de direction (6) et le siège (7) pour recouvrir la face supérieure de l'unité de cadre (22), la section de capot supérieure (31) formant un contour de carrosserie de véhicule en retrait vers le bas entre l'unité de direction (6) et le siège (7), vue de côté du véhicule ;
une section de capot latérale (32, 33) recouvrant un côté latéral de la fourche avant (24), la section de capot latérale (32, 33) s'étendant depuis une position en avant de l'unité de direction (6) jusqu'à une position en dessous de la section de capot supérieure (31), la section de capot latérale (32, 33) étant fixée à l'unité de cadre (22) ; et
une section de capot avant (34) disposée séparément de la section de capot latérale (32, 33), la section de capot avant (34) étant reliée à la partie supérieure de la section de capot latérale (32, 33), la section de capot avant (34) recouvrant le côté avant du tube de tête (21),
la section de capot latérale (32, 33) comporte une première partie en retrait (41) s'étendant vers l'arrière depuis l'extrémité avant de la section de capot latérale (32, 33), et **caractérisé par**
une partie de fixation (76, 77, 78) entre la section de capot avant (34) et la section de capot latérale (32, 33) positionnée au-dessus de la première partie en retrait (41) de sorte qu'aucune jonction entre la section de capot avant (34) et la section de capot latérale (32, 33) n'est produite sur la première partie en retrait (41).

2. Véhicule du type à selle selon la revendication 1,
dans lequel la partie avant de la section de capot latérale (32, 33) est inclinée pour positionner sa partie avant plus près du centre transversal du véhicule que sa partie arrière, et
la partie avant de la première partie en retrait (41) est inclinée pour positionner sa partie avant plus près du centre transversal du véhicule que sa partie arrière.

3. Véhicule du type à selle selon la revendication 1 ou 2,
dans lequel la section de capot latérale (32, 33) comporte une première surface inclinée (36) et une seconde surface inclinée (37),
la première surface inclinée (36) est incliné pour se séparer progressivement du centre de la carrosserie du véhicule dans la direction transversale du véhicule proportionnellement à la diminution de hauteur à partir de son extrémité supérieure,
la seconde surface inclinée (37) est positionnée en dessous de la première surface inclinée (36), la seconde surface inclinée (37) étant inclinée pour se séparer progressivement du centre de la carrosserie du véhicule dans le sens transversal du véhicule proportionnellement à l'augmentation de hauteur à partir de son extrémité inférieure, et
la première partie en retrait (41) est positionnée entre la première surface inclinée (36) et la seconde surface inclinée (37) dans la direction verticale du véhicule.

4. Véhicule du type à selle selon l'une quelconque des revendications 1 à 3, dans lequel la relation D1 < D2 est satisfaite lorsque D1 est fixée en tant que distance entre le centre de rotation (P2) de la roue avant (2) et l'extrémité avant (P1) de la section de capot latérale (32, 33) vue de côté du véhicule et D2 est fixée en tant que distance entre le centre de rotation (P2) de la roue avant (2) et une partie de bord (P3) de la section de capot latérale (32, 33) vue de côté du véhicule, la partie de bord (P3) étant une des deux parties de bord agencées sur une ligne théorique (L1) reliant le centre de rotation de la roue avant (2) et la position de fixation (35) de la section de capot latérale (32, 33) sur l'unité de cadre (22), vue de côté du véhicule, la partie de bord (P3) étant disposée plus près de la roue avant (2) que ne l'est le reste des deux parties de bord.

5. Véhicule du type à selle selon l'une quelconque des revendications 1 à 4, comprenant en outre :
un phare (18) disposé en avant de l'unité de poignée (26),
dans lequel la section de capot avant (34) est séparée à l'écart du phare (18).

6. Véhicule du type à selle selon l'une quelconque des revendications 1 à 5, dans lequel une limite entre la section de capot avant (34) et la section de capot latéral (32, 33) est disposée dans une seconde partie en retrait (55), la seconde partie en retrait (55) étant disposée plus haut que la première partie en retrait (41), la seconde partie en retrait (55) étant en retrait vers l'intérieur sur le capot de carrosserie de véhicule (8).
